# EUROPEAN PATENT SPECIFICATION

(11) **EP 1 205 014 B1**
(45) Date of publication and mention of the grant of the patent: **26.08.2009**
(21) Application number: 00945655.9
(22) Date of filing: 12.07.2000
(51) Int. Cl.: H02G 3/12

(54) **A METHOD OF PROVIDING A MOUNTING FRAME FOR ELECTRICAL COMPONENTS, A COUPLING FRAME FOR PERFORMING THE METHOD, AND A CONCEALED ELECTRICAL INSTALLATION SYSTEM FOR COOPERATION WITH THE COUPLING FRAME**
EIN VERFAHREN ZUR BEREITSTELLUNG EINES MONTAGERAHMENS FÜR ELEKTRISCHE BAUTEILE,EIN VERBINDUNGSRAHMEN ZUR AUSFÜHRUNG DES VERFAHRENS, UND EIN MIT DEM VERBINDUNGSRAHMEN KOMPATIBLES VERBORGENES ELEKTRISCHES INSTALLATIONSSYSTEM
PROCEDE DE CONSTITUTION DE BATI DE MONTAGE POUR COMPOSANTS ELECTRIQUES, ELEMENT DE RACCORDEMENT PERMETTANT DE METTRE EN OEUVRE CE PROCEDE ET INSTALLATION ELECTRIQUE DISSIMULEE COMPATIBLE AVEC CE RACCORD

(30) Priority: 13.07.1999 DK 101599
(43) Date of publication of application: 15.05.2002
(73) Proprietor: Schneider Electric Danmark A/S, 2750 Ballerup (DK)
(72) Inventor: HOLMSTRØM, Jørn, DK-2740 Skovlunde (DK)
(74) Representative: Wittrup, Flemming
(86) International application number: PCT/DK2000/000392
(87) International publication number: WO 2001/031759

(56) References cited:
- EP-A1- 0 683 554
- FR-A1- 2 730 354
- GB-A- 2 066 587
- US-A- 5 574 255
- US-A- 5 628 419

## Description

A method of providing a mounting frame for electrical components, a coupling frame for performing the method, and a concealed electrical installation system for cooperation with the coupling frame

The invention relates to a method of providing a mounting frame for electrical components with a view to connecting these to a concealed electrical installation system in a building part.

DE-A-33 43 651 discloses an electrical installation system which serves to facilitate the mounting of the electrical components in the building. It is well-known that some time is wasted in that the individual trades have to wait for each other on a building site, since it is difficult to coordinate the processes, and this problem has not been solved by the prior art, far from it.

FR-A-2 730 354 discloses a coupling frame without any consealed electrical installation system.

The object of the invention is to make the installation work more effective and flexible so that e.g. carpenters, painters and electricians can work more independently of each other, and also so that the ever increasing international trade in building elements is not impeded by national standards for the electrical components.

This object is achieved in that the concealed installation system is drilled through a covering for the building part to provide a hole in which a coupling frame is arranged, said coupling frame being fixed mechanically relative to the concealed installation system so that the coupling frame and the concealed installation system together form a cavity to receive current-carrying wires and respective electrical components.

What previously constituted the base of a known mounting frame, e.g. in the form of an installation box, is now constituted by the cavity which is provided in the first instance within the building part by means of the concealed electrical installation system. Later on when the cavities are drilled, the coupling frame of the invention is mounted, which coupling frame, in one embodiment, predominantly has the shape of a pipe section with a cross-sectional contour that corresponds to the electrical component which is to be mounted in the building part.

The centering of the drilling may be facilitated by using magnets, and once a hole has been made, other holes may advantageously be made by means of a drill jig.

The coupling frame comprises coupling means which are adapted to be inserted through the hole and are adapted to be fixed so that the coupling frame is secured.

The coupling frame may be adapted to receive a partition wall to separate a power current installation from a weak current installation. The installation as a whole is routed through the concealed installation system, but can in this manner be terminated in respective cavities for associated electrical components.

The invention also relates to a coupling frame comprising the features of claim 5. The method according to claim 1 is characterized in that an essentially closed electrical installation system is provided in the form of an elongated system of ducts which extends along a predetermined path in a wall, and that the concealed installation system is drilled through a covering for the building part to provide a hole in which a coupling frame is arranged, said coupling frame being fixed mechanically relative to the concealed installation system by coupling means so that the coupling means are caused to engage behind a wall of the concealed installation system after the coupling frame has been arranged in the hole, and so that the system of ducts is fixed between the coupling frame and the building covering along the rim of the hole drilled in the system of ducts when the coupling means are tightened.

Preferably, the external wall of the coupling frame adjoins the edge of the hole in the building part, and the internal wall of the coupling frame is shaped to cooperate with securing means on a current-carrying component. As mentioned, the coupling frame may be a pipe section with a predetermined cross-sectional contour so as to provide full access to the installation cavity in the concealed installation system. In some cases it is expedient to arrange a loose bottom in the coupling frame.

The invention moreover relates to an electrical installation system for a building, said system comprising a distributed network of possible junctions for electrical components. According to the invention, the junctions comprise a plurality of mutually electrically connected, essentially closed cavities which are concealed behind a building covering.

These closed cavities may be formed as a closed box which, arranged behind a building covering, is particularly expedient for cooperation with a coupling frame according to the invention when the box is drilled via the building covering. The boxes may be interconnected by means of cables or pipes for receiving wires, but the boxes may also be interconnected by means of closed ducts. Hereby, a distributed network of ducts and boxes may be achieved, said ducts and boxes optionally having the same cross-sectional dimensions.

It is a very great advantage of the invention that it allows the boxes or ducts to have an extent which is considerably greater than what is necessary for a single electrical component. In case of a distributed network of ducts there is thus very great freedom in arranging electrical components when carpenters and painters have finished their work, but also in the event that separate boxes are used in the concealed installation systems, the boxes may have such an extent that - once carpenters and painters have finished their work - there is great freedom in carrying out drilling and mounting of more contacts, switches, etc. side by side, vertically or horizontally.

The installation system according to the invention also involves great advantages in the export of building elements with a pre-fabricated installation system to countries which may have different standards for the electrical components which are to be placed in the building parts. The dimensions of the electrical components used in various countries may vary greatly, but owing to the extent of the closed installation boxes both large and small mounting frames can be made according to the invention, and it is therefore just necessary to manufacture special coupling frames which fit the electrical components in size but also with respect to the coupling means for securing the electrical components in the coupling frames.

The securing means of the coupling frame may be adapted to engage an internal wall of the concealed duct or the concealed boxes, and when the external rim of the coupling frame extends completely or partly inwardly over the hole in the building covering, the ducts or the boxes may be clamped to engage the internal side of the building covering.

The coupling frame may be inserted into the hole in different ways, so that, during the insertion, the securing means are retracted and are caused to assume their active, engaging position only when the coupling frame is in position in the hole.

The invention will be explained more fully by means of some embodiments with reference to the drawing, in which
figs. 1 and 2 schematically show the principle according to the invention,
figs. 3 and 4 show an embodiment of a coupling frame for use in connection with the invention,
fig. 5 shows another example of a coupling frame,
figs. 6 and 7 show a building part in which the mounting frame is to be established,
fig. 8 shows a drill jig for use in connection with the mounting,
fig. 9 schematically shows an embodiment of an installation system according to the invention, while
fig. 10 schematically shows another embodiment of an installation system according to the invention.

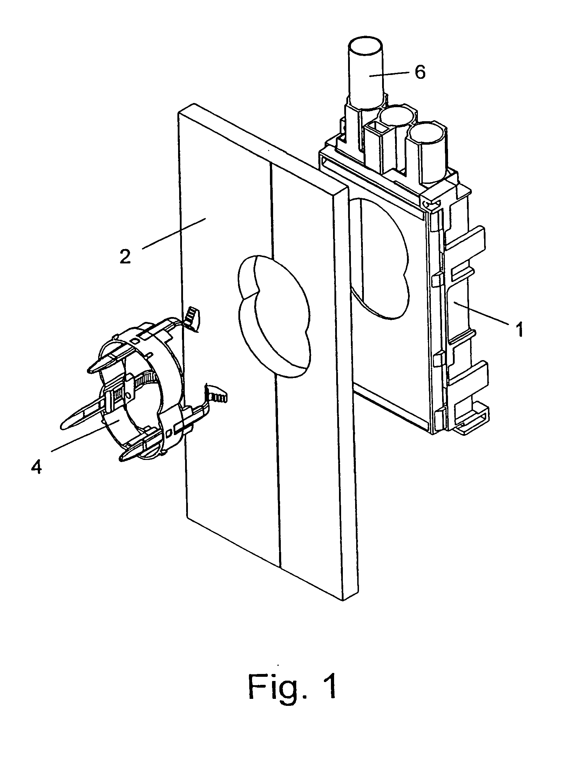

Fig. 1 shows a concealed installation box 1, a front plate 2 and a rear plate 3 of a building part, such as a plaster wall, as well as a coupling frame 4 or 5.

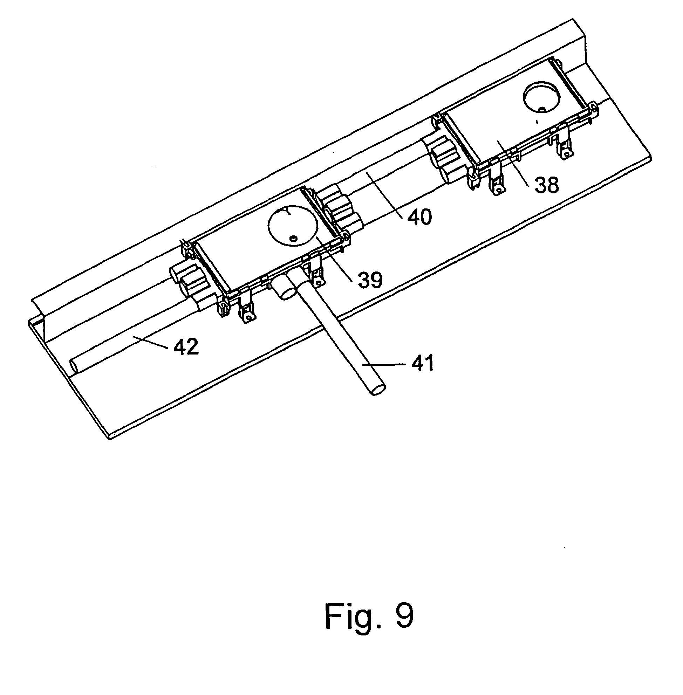

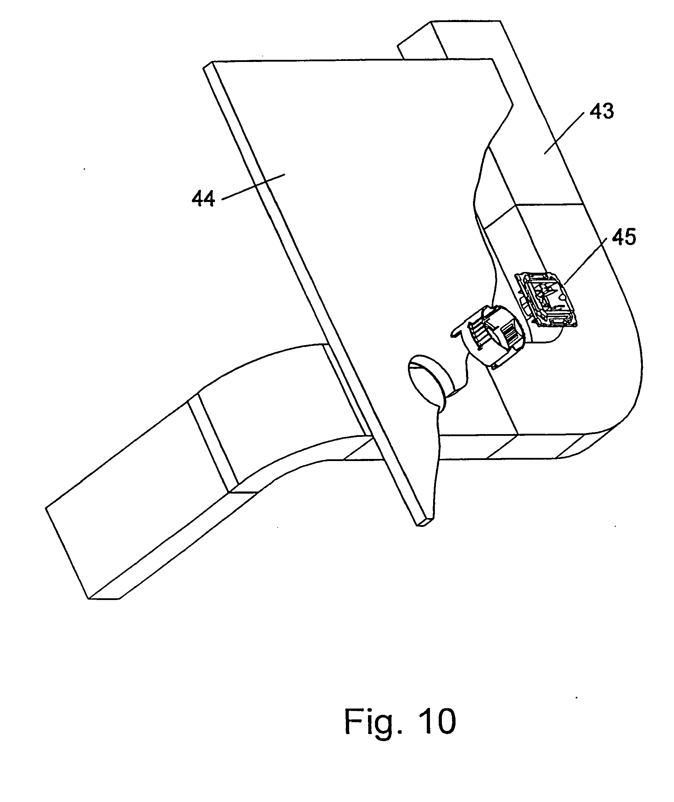

As will be described later in connection with figs. 9 and 10, the invention may be used in connection with a distributed network of concealed installation boxes which are interconnected by means of cables or wires 6, 7, and/or a distributed duct system which contains cables or wires.

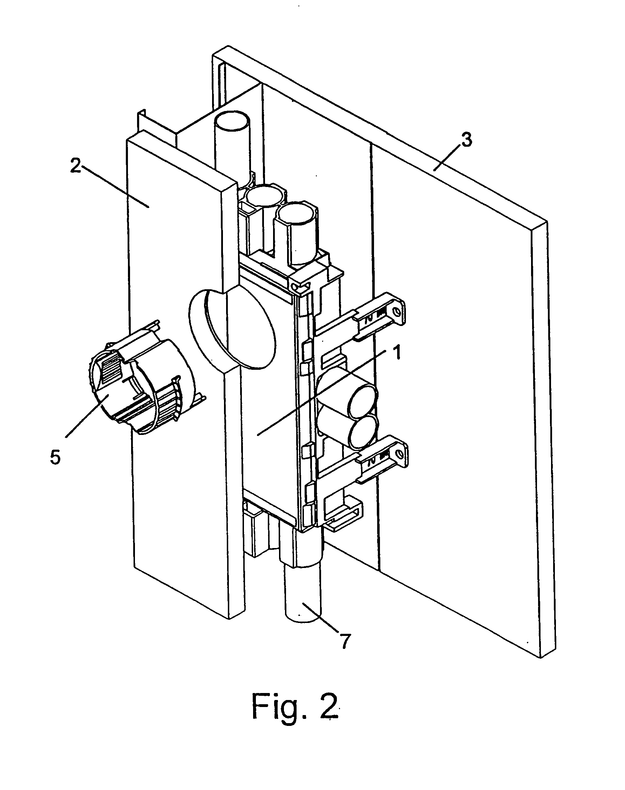

The unique aspect of the invention is that, in the first instance, the installation just comprises the closed concealed installation, e.g. as shown in fig. 2, but where no drilling of the concealed installation boxes has been carried out as yet. The drilling will depend partly on the type of coupling frame to be mounted, which in turn also depends on which types of contacts or switches, etc. are to be arranged later in the coupling frame. This makes it easier to export building elements which also contain the concealed installation to various countries having different standards for electrical equipment, since the drilling necessary to allow mounting of the correct coupling frame corresponding to the relevant installation equipment is carried out after the building parts have been erected.

Even if the concealed installation is not to be exported, the method of the invention provides the advantage that the carpenter and the painter can finish their work before the electrician starts the mounting. The trades are thus more independent of each other.

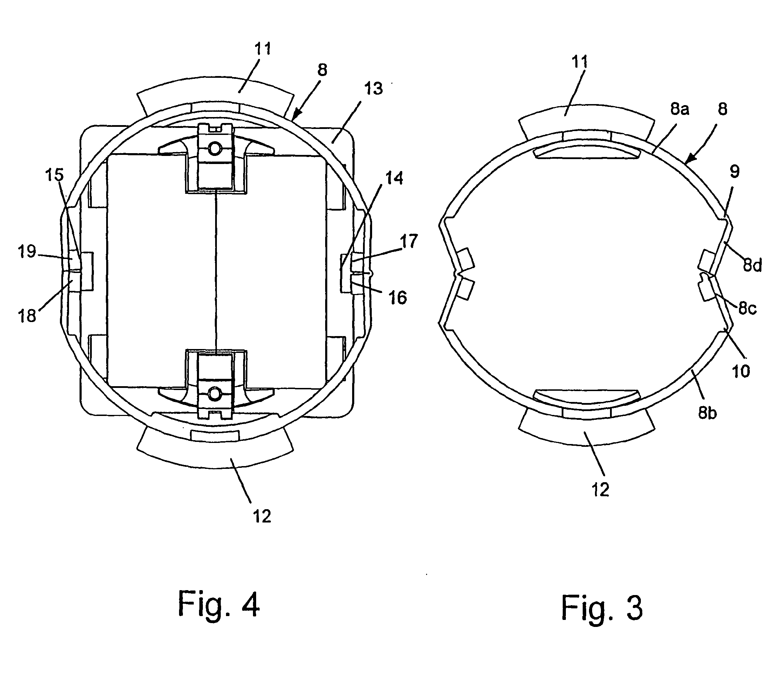

The two shown types of coupling frames 4 and 5 will be explained more fully later with reference to figs. 3-5. But it will be appreciated on the basis of figs. 1 and 2 how the concealed installation box 1 is mounted in a partition wall, preferably so that the installation box engages the rear side of a plaster board, following which a hole is drilled, as appears from fig. 2, in which the coupling frame 4 or 5 may be arranged. The coupling frame 4 may be intended for a socket outlet, while the coupling frame 5 may be intended for a switch (see fig. 10). The coupling frame 5 of fig. 2 is also shown in figs. 3 and 4, where fig. 4 moreover shows an electrical component which is arranged in the coupling frame. The coupling frame comprises a substantially cylindrical wall consisting of wall parts 8a-8d (the other wall parts are not designated since they basically function in the same manner as 8a-8d). Film hinges 9, 10 are present between the wall parts 8a,d and 8c,b, respectively, so that the wall parts 8a and 8b can move toward each other, thereby allowing the flanges 11, 12, which are integral with the wall parts 8a and 8b, respectively, to get within the substantially circular contour which the coupling frame 5 has, which in turn corresponds to the contour of the hole which is drilled through the wall 2 and the concealed installation box 1. The coupling frame 5 may hereby be arranged in the hole, and then the walls 8c and 8d are straightened out to the position shown in fig. 4, whereby the projections 11, 12 engage the inner side of the wall of the concealed installation box 1 which faces the plaster board 2. An electrical component is indicated at 13, having an engagement area 14, 15 for engagement with the bosses 16, 17 and 18, 19, respectively. This prevents collapse of the wall parts 8a-8d of the coupling frame 5. The described example of a coupling frame can be manufactured at very low costs.

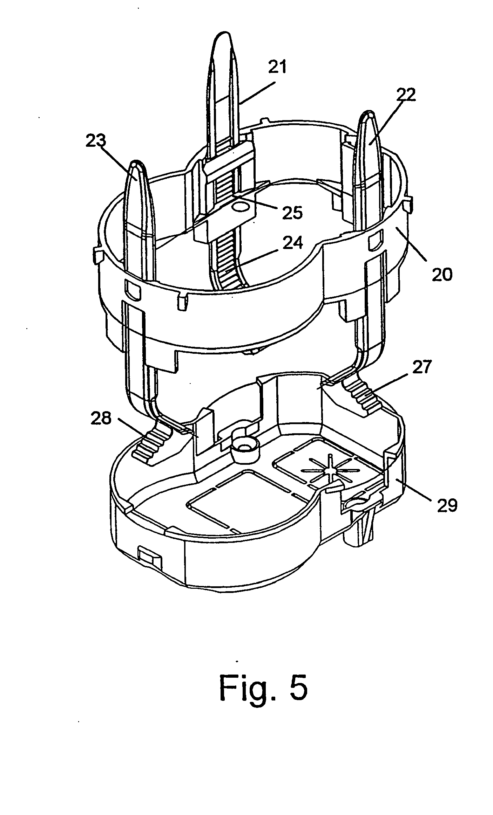

Another example of a coupling frame is shown in greater detail in fig. 5, where the wall 20 of the coupling frame is formed to receive another type of electrical component than the one shown at 13 in fig. 4. The mounting means for the embodiment shown in fig. 5 are made in a manner known per se by means of three strips 21-23, which each are provided with a toothing 24 and are placed in a groove with an elastic ratchet pawl 25. Each of the strips 21-23 ends in a claw, e.g. 27 or 28, which, in the position shown in fig. 5, is disposed within the contour of the hole drilled in the wall (see fig. 1) so that the coupling frame can be mounted in the hole. When the strips are then pulled, the claws will be caused to engage the internal wall of the concealed installation box, whereby the coupling frame is mounted.

In comparison with known installation boxes, e.g. a box for recessed mounting, the invention may be regarded as a "two-part" box, there being provided a concealed installation system in the first instance, and only after drilling and mounting of coupling frames will the installation resemble what is known from prior art boxes for recessed mounting. As already mentioned, the advantage of the invention is that the working operations for the various trades are more flexible, and that different types of coupling frames and associated electrical components may be arranged freely to a much higher degree than before. The partition wall 29 shown in fig. 5 is just an accessory which may optionally be mounted in the coupling frame if it is desired e.g. to separate a power current installation from a weak current installation.

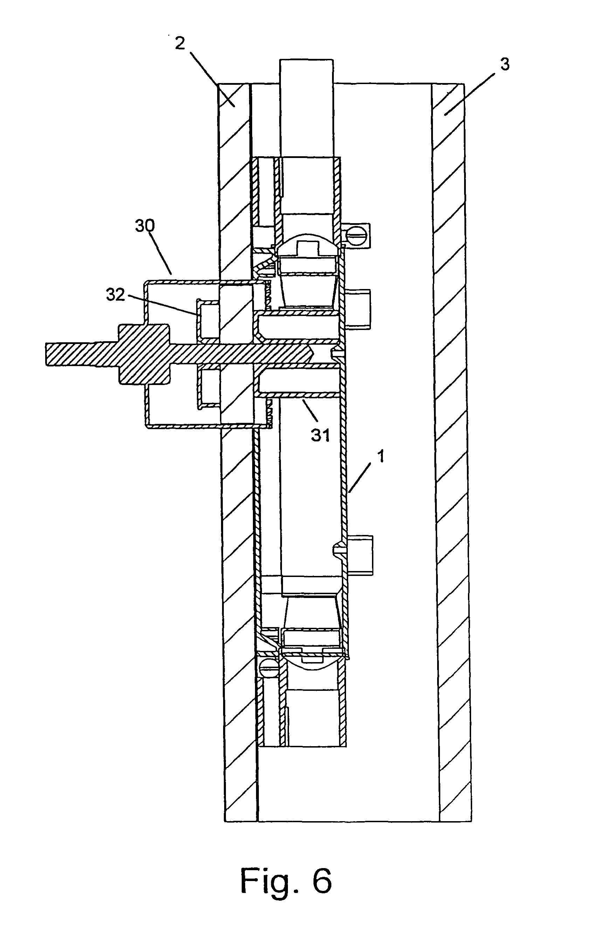

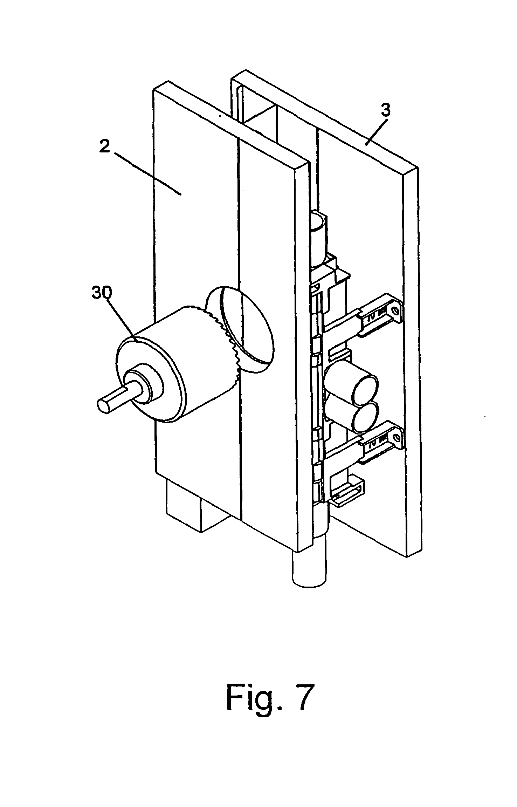

A description will be given below of some working operations which serve to demonstrate how easy it is to use the installation system according to the invention. Figs. 6 and 7 show how the drilling may be carried out through the plate wall 2 by means of e.g. a spoon bit 30. The concealed installation box 1 may be provided with a strong circular magnet 31, and it may be detected by means of a search magnet 32 in a manner known per se where the first hole may advantageously be drilled in the plate wall 2.

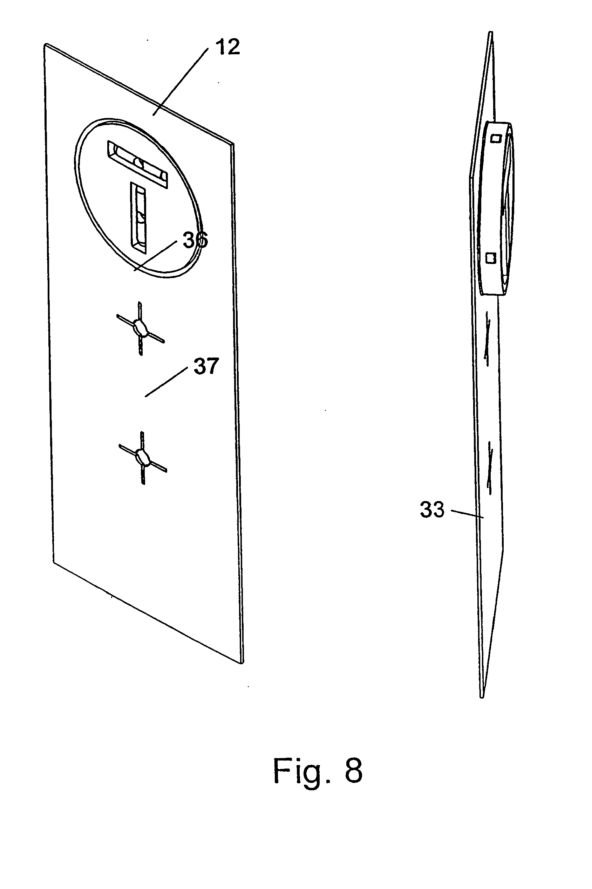

When/if more holes are to be drilled in the same installation box 1 (or duct), the drill jig 33 shown in fig. 8 may advantageously be used, said drill jig containing a pair of mutually perpendicular levels 34, 35. When the hole has been centered, as explained in connection with fig. 6, it may be marked, before using the spoon drill 30, where a further hole must be, and the hole, as explained in connection with fig. 6, is caused to be flush with a hole 36 in the drill jig so that the hole 37 defines the next hole which is to be drilled after the levels have been set correctly. Drilling may be continued in this manner to provide a desired number of holes vertically above each other or horizontally side by side, depending on how large installation boxes are used for the concealed installation.

As shown in fig. 9, the concealed installation may basically consist of a plurality of concealed installation boxes 38, 39 which are interconnected by means of cables or pipes for wires 40-42. By means of the described magnet centering system it is easy for the electrician to hit the mark in the finished wall plate.

The concealed installation system may also comprise a distributed network of closed ducts 43 which are positioned behind a plate wall 44. This embodiment has the advantage that later there is great freedom in drilling additional coupling frames vertically or horizontally side by side. Fig. 10 also shows an electrical component 45, which may be a switch, a socket outlet, a telephone jack, a data terminal, control lamps, etc. According to the invention the installation does not have to comprise a specific type or a specific make of coupling frames and associated electrical components. The invention also allows mixing of different types, when only the drilling is carried out in accordance with the dimension or contour of the coupling frame used.

## Claims

1. A method of providing an electrical installation comprising mounting means for accessible electrical components and comprising concealed raceways (1) for electrical connections between the electrical components,
**characterized in**
**that** an essentially closed electrical installation system is provided in the form of an elongated system of ducts (1, 7, 43) which extends along a predetermined path in a wall, and
**that** the concealed installation system is drilled through a covering (2) for the building part to provide a hole in which a coupling frame (4, 5) is arranged, said coupling frame (4, 5) being fixed mechanically relative to the concealed installation system by coupling means (11, 12, 27, 28) so that the coupling means are caused to engage behind a wall of the concealed installation system after the coupling frame (4, 5) has been arranged in the hole, and so that the system of ducts is fixed between the coupling frame and the building covering along the rim of the hole drilled in the system of ducts when the coupling means (11, 12, 27, 28) are tightened.

2. A method according to claim 1, wherein the coupling frame comprises coupling means which extend outside the contour of the coupling frame in their active position,
**characterized in that** the hole is drilled to correspond to the contour of the coupling frame, and that the coupling means (11, 12, 27, 28) are brought within this contour when the coupling frame is arranged in the hole.

3. A method according to claim 1, **characterized in that** the coupling frame (4, 5) has an open bottom facing the system of ducts, so that the coupling frame and the concealed system of ducts together form a cavity for receiving current-carrying wires and respective electrical components.

4. A method according to claim 3, **characterized in that** several cavities are provided by means of partition walls (29) in the cavity which is defined by the concealed installation system and a plurality of coupling frames.

5. A coupling frame adapted to be inserted into a hole which extends through a building covering which covers a concealed installation system according to claim 1,
**characterized in that** the coupling frame (4, 5) has an open bottom facing the installation system, and that the coupling frame has means (11, 12, 27, 28) adapted to connect it mechanically with the installation system so that the installation system and the coupling frame together form a cavity for receiving current-carrying wires and respective electrical components.

6. A coupling frame according to claim 5, **characterized in that** it comprises a removable bottom (fig. 5) which adjoins the wall of the coupling frame.

7. A coupling frame according to claim 6, **characterized in that** the coupling frame comprises securing means (21-23) which are adapted to engage an internal wall of the concealed installation system.

8. A coupling frame according to claim 7, **characterized in that** the coupling frame has a wall (20) whose external rim extends fully or partly inwardly over the hole in the building covering, and that the securing means (21-23) are arranged at a distance from this rim which corresponds to the thickness of the building covering (2) so that ducts or boxes (1) associated with the concealed installation system are pulled into engagement with the internal side of the building covering (2) when the securing means are clamped.

9. A coupling frame according to claim 7, **characterized in that** the securing means (11, 12) extend beyond the contour of the wall (8a-8d), and that the wall is deformable so that the securing means may be brought within the contour of the non-deformed wall when the wall is deformed.

10. A coupling frame according to claim 7, **characterized in that** the securing means comprise clamping means (27, 28) which are positioned within the contour of the wall (20) in a first position, and which extend beyond the contour of the wall in a second, clamped position.

11. An electrical installation system for a building, said system comprising a distributed network of possible junctions for electrical components, **characterized in that** the junctions comprise a plurality of mutually electrically connected, essentially closed cavities (38, 39) which are concealed behind a building covering (44).

12. An installation system according to claim 11,
**characterized in that** it comprises a plurality of separate, essentially closed boxes (38, 39) which have a significantly greater extent than the electrical components which are to be arranged in the installation system.

13. An installation system according to claim 12,
**characterized in that** the boxes (38, 39) are mutually electrically connected by means of cables (40) or pipes (42) for receiving wires.

14. An installation system according to claim 12 or 13,
**characterized in that** the boxes are mutually connected by means of closed ducts (43) which are to be arranged in the installation system.

15. An installation system according to claim 14,
**characterized in that** the ducts have a significantly greater extent than the electrical components which are to be arranged in the installation system.

## Patentansprüche

1. Verfahren zur Bereitstellung einer Elektroinstallation mit einem Montagemittel für zugänglich elektrische Bauteile und mit verborgenen Laufbahnen (1) für elektrische Verbindungen zwischen den elektrischen Bauteilen,
**dadurch gekennzeichnet, dass**
ein im Wesentlichen geschlossenes Elektroinstallationssystem in Form eines längliche Systems von Kanälen (1, 7, 43) bereitgestellt wird, das sich entlang einem vorbestimmten Weg in einer Wand erstreckt, und
das verborgene Installationssystem durch eine Abdeckung (2) für das Gebäudeteil gebohrt wird, um ein Loch zu bilden, in das ein Verbindungsrahmen (4, 5) angeordnet wird, wobei der Verbindungsrahmen (4, 5) bezüglich des verborgenen Installationssystems durch Verbindungsmittel (11, 12, 27, 28) mechanisch festgelegt wird, so dass bewirkt wird, dass die Verbindungsmittel eine Wand des verborgenen Installationssystems hintergreifen, nachdem der Verbindungsrahmen (4, 5) in dem Loch angeordnet worden ist, und so dass das System von Kanälen zwischen dem Verbindungsrahmen und der Gebäudeabdeckung entlang dem Rand des in dem System von Kanälen gebohrten Lochs befestigt wird, wenn die Verbindungsmittel (11, 12, 27, 28) festgezogen werden.

2. Verfahren nach Anspruch 1, wobei der Verbindungsrahmen Verbindungsmittel umfasst, die sich in ihrer aktiven Position außerhalb der Kontur des Verbindungsrahmens erstrecken, **dadurch gekennzeichnet, dass** das Loch so gebohrt wird, dass es der Kontur des Verbindungsrahmens entspricht, und dass die Verbindungsmittel (11, 12, 27, 28) innerhalb dieser Kontur gebracht werden, wenn der Verbindungsrahmen in dem Loch angeordnet wird.

3. Verfahren nach Anspruch 1, **dadurch gekennzeichnet, dass** der Verbindungsrahmen (4, 5) einen offenen Boden aufweist, der zu dem System von Kanälen weist, so dass der Verbindungsrahmen und das verborgene System von Kanälen zusammen einen Hohlraum zur Aufnahme von stromführenden Drähten und jeweiligen elektrischen Bauteilen bilden.

4. Verfahren nach Anspruch 3, **dadurch gekennzeichnet, dass** die mehreren Hohlräume durch Trennwände (29) in dem durch das verborgene Installationssystem und mehrere Verbindungsrahmen definierten Hohlraum gebildet werden.

5. Verbindungsrahmen, der zum Einführen in ein Loch ausgeführt ist, das durch eine Gebäudeabdeckung verläuft, die ein verborgenes Installationssystem nach Anspruch 1 abdeckt, **dadurch gekennzeichnet, dass** der Verbindungsrahmen (4, 5) einen offenen Boden aufweist, der zu dem Installationssystem weist, und dass der Verbindungsrahmen Mittel (11, 12, 27, 28) aufweist, die dazu ausgeführt sind, ihn mechanisch mit dem Installationssystem zu verbinden, so dass das Installationssystem und der Verbindungsrahmen zusammen einen Hohlraum zur Aufnahme von stromführenden Drähten und jeweiligen elektrischen Bauteilen bilden.

6. Verbindungsrahmen nach Anspruch 5, **dadurch gekennzeichnet, dass** er einen entfernbaren Boden (Figur 5) aufweist, der an der Wand des Verbindungsrahmens angrenzt.

7. Verbindungsrahmen nach Anspruch 6, **dadurch gekennzeichnet, dass** der Verbindungsrahmen Befestigungsmittel (21 - 23) umfasst, die dazu ausgeführt sind, eine Innenwand des verborgenen Installationssystems in Eingriff zu nehmen.

8. Verbindungsrahmen nach Anspruch 7, **dadurch gekennzeichnet, dass** der Verbindungsrahmen eine Wand (20) aufweist, deren Außenrand sich ganz oder teilweise einwärts über das Loch in der Gebäudeabdeckung erstreckt, und dass die Befestigungsmittel (21 - 23) in einem Abstand von diesem Rand angeordnet sind, der der Dicke der Gebäudeabdeckung (2) entspricht, so dass Kanäle oder Kästen (1), die dem verborgenen Installationssystem zugeordnet sind, in Eingriff mit der Innenseite der Gebäudeabdeckung (2) gezogen werden, wenn die Befestigungsmittel festgeklemmt werden.

9. Verbindungsrahmen nach Anspruch 7, **dadurch gekennzeichnet, dass** sich die Befestigungsmittel (11, 12) über die Kontur der Wand (8a - 8d) hinaus erstrecken und dass die Wand verformbar ist, so dass die Befestigungsmittel innerhalb der Kontur der nicht verformten Wand gebracht werden können, wenn die Wand verformt wird.

10. Verbindungsrahmen nach Anspruch 7, **dadurch gekennzeichnet, dass** die Befestigungsmittel Klemmmittel (27, 28) umfassen, die in einer ersten Position innerhalb der Kontur der Wand (20) positioniert sind und sich in einer zweiten, geklemmten Position über die Kontur der Wand hinaus erstrecken.

11. Elektroinstallationssystem für ein Gebäude, wobei das System ein verteiltes Netz von möglichen Verbindungsstellen für elektrische Bauteile umfasst, **dadurch gekennzeichnet, dass** die Verbindungsstellen mehrere miteinander verbundene, im Wesentlichen geschlossene Hohlräume (38, 39) umfassen, die hinter einer Gebäudeabdeckung (44) verborgen sind.

12. Installationssystem nach Anspruch 11, **dadurch gekennzeichnet, dass** es mehrere getrennte, im Wesentlichen geschlossene Kästen (38, 39) umfasst, die eine wesentlich größere Erstreckung aufweisen als die elektrischen Bauteile, die in dem Installationssystem angeordnet werden sollen.

13. Installationssystem nach Anspruch 12, **dadurch gekennzeichnet, dass** die Kästen (38, 39) durch Kabel (40) oder Rohre (42) zur Aufnahme von Drähten elektrisch miteinander verbunden sind.

14. Installationssystem nach Anspruch 12 oder 13, **dadurch gekennzeichnet, dass** die Kästen durch geschlossene Kanäle (43), die in dem Installationssystem anzuordnen sind, miteinander verbunden sind.

15. Installationssystem nach Anspruch 14, **dadurch gekennzeichnet, dass** die Kanäle eine wesentlich größere Erstreckung aufweisen als die elektrischen Bauteile, die in dem Installationssystem angeordnet werden sollen.

## Revendications

1. Procédé de fourniture d'une installation électrique comprenant des moyens de montage pour des composants électriques accessibles et comprenant des canalisations dissimulées (1) pour des connexions électriques entre les composants électriques,
**caractérisé en ce**
**qu'**un système d'installation électrique essentiellement fermé est prévu sous la forme d'un système allongé de conduits (1, 7, 43) qui s'étend le long d'un parcours prédéterminé dans une paroi, et
en ce que le système d'installation dissimulé est percé à travers un revêtement (2) pour la partie du bâtiment afin de fournir un trou dans lequel un bâti de raccordement (4, 5) est disposé, ledit bâti de raccordement (4, 5) étant fixé mécaniquement par rapport au système d'installation dissimulé par des moyens de raccordement (11, 12, 27, 28) de façon à ce que ces moyens de raccordement soient amenés à s'engager derrière une paroi du système d'installation dissimulé après que le bâti de raccordement (4, 5) a été disposé dans le trou, et de façon à ce que le système de conduits soit fixé entre le bâti de raccordement et le revêtement du bâtiment le long du pourtour du trou percé dans le système de conduits lorsque les moyens de raccordement (11, 12, 27, 28) sont serrés.

2. Procédé selon la revendication 1, dans lequel le bâti de raccordement comprend des moyens de raccordement qui s'étendent à l'extérieur du contour du bâti de raccordement dans leur position active, **caractérisé en ce que** le trou est percé de façon à correspondre au contour du bâti de raccordement, et **en ce que** les moyens de raccordement (11, 12, 27, 28) sont amenés à l'intérieur de ce contour lorsque le bâti de raccordement est disposé dans le trou.

3. Procédé selon la revendication 1, **caractérisé en ce que** le bâti de raccordement (4, 5) a un fond ouvert tourné vers le système de conduits, de façon à ce que le bâti de raccordement et le système dissimulé de conduits forment ensemble une cavité pour recevoir des fils porteurs de courant et des composants électriques respectifs.

4. Procédé selon la revendication 3, **caractérisé en ce que** plusieurs cavités sont fournies au moyen de parois de séparation (29) dans la cavité qui est définie par le système d'installation dissimulé et par une pluralité de bâtis de raccordement.

5. Bâti de raccordement adapté de façon à être inséré dans un trou qui s'étend à travers un revêtement de bâtiment qui couvre un système d'installation dissimulé selon la revendication 1, **caractérisé en ce que** le bâti de raccordement (4, 5) a un fond ouvert tourné vers le système d'installation, et **en ce que** le bâti de raccordement a des moyens (11, 12, 27, 28) adaptés de façon à le raccorder mécaniquement avec le système d'installation de façon à ce que le système d'installation et le bâti de raccordement forment ensemble une cavité pour recevoir des fils porteurs de courant et des composants électriques respectifs.

6. Bâti de raccordement selon la revendication 5, **caractérisé en ce qu'**il comprend un fond amovible (Figure 5) qui est contigu au bâti de raccordement.

7. Bâti de raccordement selon la revendication 6, **caractérisé en ce que** le bâti de raccordement comprend des moyens de fixation (21-23) qui sont adaptés de façon à s'engager avec une paroi interne du système d'installation dissimulé.

8. Bâti de raccordement selon la revendication 7, **caractérisé en ce que** le bâti de raccordement a une paroi (20) dont le pourtour externe s'étend complètement ou partiellement vers l'intérieur au-dessus du trou dans le revêtement du bâtiment, et **en ce que** les moyens de fixation (21-23) sont disposés à une distance de ce rebord qui correspond à l'épaisseur du revêtement du bâtiment (2) de façon à ce que les boîtes ou les conduits (1) associés au système d'installation dissimulé s'engagent par traction avec le côté interne du revêtement du bâtiment (2) lorsque les moyens de fixation sont serrés.

9. Bâti de raccordement selon la revendication 7, **caractérisé en ce que** les moyens de fixation (11, 12) s'étendent au-delà du contour de la paroi (8a-8d), et **en ce que** la paroi est déformable de manière à ce que les moyens de fixation puissent être amenés à l'intérieur du contour de la paroi non déformée lorsque la paroi est déformée.

10. Bâti de raccordement selon la revendication 7, **caractérisé en ce que** les moyens de fixation comprennent des moyens de serrage (27, 28) qui sont positionnés à l'intérieur du contour de la paroi (20) dans une première position, et qui s'étendent au-delà du contour de la paroi dans une deuxième position serrée.

11. Système d'installation électrique pour un bâtiment, ledit système comprenant un réseau réparti de jonctions possibles pour des composants électriques, **caractérisé en ce que** ces jonctions comprennent une pluralité de cavités essentiellement fermées, connectées électriquement mutuellement (38, 39) qui sont dissimulées derrière un revêtement de bâtiment (44).

12. Système d'installation selon la revendication 11, **caractérisé en ce qu'**il comprend une pluralité de boîtes séparées, essentiellement fermées (38, 39) qui ont une dimension sensiblement plus grande que les composants électriques qui doivent être disposés dans le système d'installation.

13. Système d'installation selon la revendication 12, **caractérisé en ce que** les boîtes (38, 39) sont connectées électriquement mutuellement au moyen de câbles (40) ou de tuyaux (42) pour recevoir des fils.

14. Système d'installation selon la revendication 12 ou 13, **caractérisé en ce que** les boîtes sont connectées mutuellement au moyen de conduits fermés (43) qui doivent être disposés dans le système d'installation.

15. Système d'installation selon la revendication 14, **caractérisé en ce que** les conduits ont une dimension sensiblement plus grande que les composants électriques qui doivent être disposés dans le système d'installation.
